(19) Europäisches Patentamt
European Patent Office
Office européen des brevets

(11) **EP 2 562 417 A1**

(12) **EUROPEAN PATENT APPLICATION**
published in accordance with Art. 153(4) EPC

(43) Date of publication:
**27.02.2013 Bulletin 2013/09**

(21) Application number: **10757802.3**

(22) Date of filing: **04.08.2010**

(51) Int Cl.:
*F03D 9/00* (2006.01)   *H02K 17/44* (2006.01)
*H02P 9/30* (2006.01)

(86) International application number:
**PCT/ES2010/070540**

(87) International publication number:
**WO 2011/131803 (27.10.2011 Gazette 2011/43)**

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **21.04.2010 ES 201030583**

(71) Applicants:
• **Aguirre Jimenez, Oscar Enrique
20200 Beasain (ES)**
• **Garmendia Soto, Iker Iñaki
20220 Beasain (Gipuzkoa) (ES)**
• **Imaz Insausti, Jose Antonio
20200 Beasain (ES)**

(72) Inventors:
• **Aguirre Jimenez, Oscar Enrique
20200 Beasain (ES)**
• **Garmendia Soto, Iker Iñaki
20220 Beasain (Gipuzkoa) (ES)**
• **Imaz Insausti, Jose Antonio
20200 Beasain (ES)**

(74) Representative: **Pons Ariño, Angel
Glorieta Ruben Dario 4
28010 Madrid (ES)**

(54) **THREE-PHASE ELECTRICAL GENERATOR AND SYSTEM FOR TURBINES**

(57)     The invention relates to a three-phase alternating current generator which is provided with an exciter assembly solidly connected to two independent energy assemblies and which is intended for turbines, such as wind or water turbines, wherein said generator receives reactive energy from the electrical grid and dispenses with the use of gearboxes, brushes and slip rings

Dyn11yn5/Dyn1yn7
48

FIG. 1

EP 2 562 417 A1

**Description**

## OBJECT OF INVENTION

Present invention falls within the field of electrical energy generation and, more specifically, electrical energy generation using a wind or hydraulic turbine or any other driving mechanism wherein it is not necessary or possible to maintain a constant actuation speed.

## BACKGROUND OF INVENTION

Electrical energy demand at Spain is growing at 62% on average over ten-year periods, and besides electricity generation from fossil fuels (coal, petroleum and gas) is limited and taxed (economically penalized) by the Kyoto Protocol. There are two risk factors inherent to nuclear energy: a nuclear accident, with its corresponding leakage of radioactive material, and the controversial storage of its radioactive waste.

As a result, renewable energy sources (wind and solar) are becoming increasingly important. Of these, that most widely used in Spain and which requires the least initial investment is wind energy.

At 2005, electrical energy generation in Spain reached 6.9% in the way of wind energy and 12.6% of installed capacity. This figure is increasing, due to limitations inherent to thermoelectric and thermonuclear generators.

However, electric energy generation using the wind turbines of the prior state of the art involves certain difficulties during operation thereof, such as that the generation system consumes, rather than generates, reactive power (kVAR) from the Power Grid and besides, the windmill blade rotation speed mechanism (gearbox) involves a substantial maintenance cost, not to mention wear at brushes and slip rings.

## DESCRIPTION OF INVENTION

Present invention proposes an alternating-current three-phase electrical generator for any driving mechanism, such as wind and hydraulic turbines, which absorbes the reactive power of the Electric Grid and eliminates the use of a gearbox, brushes and slip rings, thereby eliminating the disadvantages mentioned in the preceding section.

It is important to note that, as in the case of any system for electrical energy generation at a variable speed higher than synchronous speed, the voltage and frequency are established by the Power Grid System, which provides the reactive power (kVAR), and the amount of electrical energy converted from mechanical to electrical, is established by the difference in the apparent rotation speed of the magnetic field produced by the electrical currents circulating through the rotor (the sum of the physical rotation speed of the common shaft of the machines plus the rotation speed of the magnetic field of the three-phase electrical currents "injected" into the rotor itself) and the rotation speed of the rotating magnetic field, produced by the supply of reactive power (kVAR).

Generator of the invention basically comprises three independent magnetic field circuits called exciter set CE, first power set CP1 and second power set CP2, which have cores, a stator and rotor incorporated in a common casing and coupled to a common shaft whereto a prime mover is coupled (wind or hydraulic turbine). The generator also comprises means for transmitting the electric power generated to the Power Grid. These elements are described in further detail below:

a) Exciter set CE

It has the function of regulating the frequency of the electrical current intensities "injected" into the rotors of the other two magnetic circuits CP1 and CP2. The exciter set comprises:

- A rotor coupled to the turbine shaft and having first and second three-phase winding at, wye connection and 180° electrically out-of-phase with each other.
- A stator having a third wye-connected three-phase winding.

Exciter set is fed by means of a frequency converter (Inverter) connected to the Power Grid, which is controlled automatically in order to regulate the supply frequency of the third winding in accordance with the rotation speed at the common shaft.

b) First power set CP1

It has the function of converting the rotating mechanical energy of the common shaft into electrical energy which is injected into the Power Grid. The first power set comprises the following elements:

- a rotor coupled to the common shaft and having a fourth wye-connected three-phase winding in contact, by means of a solidary connection, with the second winding of the rotor of the exciter set CE, and
- a stator having a fifth wye-connected three-phase winding.

c) Second power set CP2

Power set CP2 has the same function and is identical in construction to CP1. That is, the rotor, windings and stator windings of the second power set CP2 has identical electromagnetic properties as the first power set CP1. Besides, both, the number of poles of the first power set CP1 and the number of poles of the second power set CP2 is preferably greater than the number of poles of the exciter set CE.

Second power set CP2 is composed by the following elements:

- a rotor coupled to the shaft and having a sixth wye-connected three-phase winding in contact, by means of a solidary connection, with the first winding of the rotor of the CE exciter set.
- a stator having a seventh wye-connected three-phase winding.

d) Power transmission means

Their function is to transmit the electric power generated by the CP1 and CP2 sets to the Power Grid. To this end, the power transmission means should be connected to the respective stators of the aforementioned CP1 and CP2 sets.

Therefore, the electric connections that join power sets CP1 and CP2 to the CE exciter set allow injection of the electric current of the windings of the exciter set rotor into the windings of the CP1 and CP2 power set rotors without slip rings.

Additionally, as the two CP1 and CP2 power sets have identical rotation direction and the rotor windings are connected to windings 180° out-of-phase with the exciter set CE, the voltage induced in the stators of both magnetic circuits is 180° out-of-phase and therefore is required that the power transmission means be prepared in order to restore the voltages of CP1 and CP2 back into phase and then, to transmit the electrical energy to the Power Grid. To this end, the power transmission means can be designed in different ways, some of which are described below:

1) First possibility is to install a three-phase transformer having at least three windings respectively connected to the stator of the CP1 power set, to the stator of the CP2 power set and to the Power Grid.

In a preferred achievement, it can be a transformer having three windings with connection group Dyn11yn5 or Dyn1yn7, where a wye winding is connected to the stator of the CP1 power set, another wye winding is connected to the stator of the CP2 power set and the delta winding is connected to the Power Grid. Therefore, the delta-connected (Δ) winding receives the reactive power (kVAR) for CP1 and CP2 from the Power Grid, likewise, the active power they generate is also injected into the Power Grid through the aforementioned winding. In this case it is essential that the mutual inductances between the wye-connected (Y) windings (connected, in turn, to CP1 and CP2) and the delta-connected (Δ) winding are identical.

2) Second possibility is to install two three-phase transformers having two windings each-one and connection groups Yyn0 and Yyn6, both having identical electromagnetic characteristics (identical rated voltages, resistances, reactances and mutual inductances), respectively connected between the stators of the CP1 and CP2 power sets and the Power Grid. Naturally, both must be equipped with a third delta-connected winding, wherethrough the third harmonic component of the magnetizing electric current intensity of each transformer will circulate.

In another preferred achievement, the generator of the invention additionally comprises an impulse generator adapted to detect shaft rotation speed and convert it into a proportional-integral electrical signal that controls the frequency converter output frequency applied to the third three-phase winding, disposed in the stator of the exciter set CE, in such way that if the shaft varies its rotation speed, the output frequency of the frequency converter varies its value proportionally so that a slip S in the CP1 and CP2 power sets maintains its frequency within a stable zone of the characteristic Mechanical torque developed vs. Rotation speed curve.

Object of the invention has the rotor circuits of the power sets disposed in such way that they are not at short circuit, but rather they are electrically connected to the rotor windings of the exciter set; likewise, the physical rotation speed (rps) of the common shaft depends on the mechanical energy that the prime mover applies to the common shaft.

**DESCRIPTION OF DRAWINGS**

In order to complement the description carried-out and with the object of helping to better understanding of characteristics of invention, according to a preferred example of practical achievement thereof, a set of drawings have been included as an integral part of this description wherein the following has been represented in an illustrative and non-limiting way:

Figure 1 shows a diagram of the system and generator with a (1) three-phase transformer having three (3) windings.
Figure 2 shows a diagram of the system and generator with two (2) three-phase transformers having two (2) windings each-one.
Figures 3a and 3b show the phasorial diagrams of power sets (CP1 and CP2).

**PREFERRED ACHIEVEMENT OF INVENTION**

Based on the foregoing figures, a preferred achievement of generator and system that makes use of this generator which are the objects of this invention is described below.

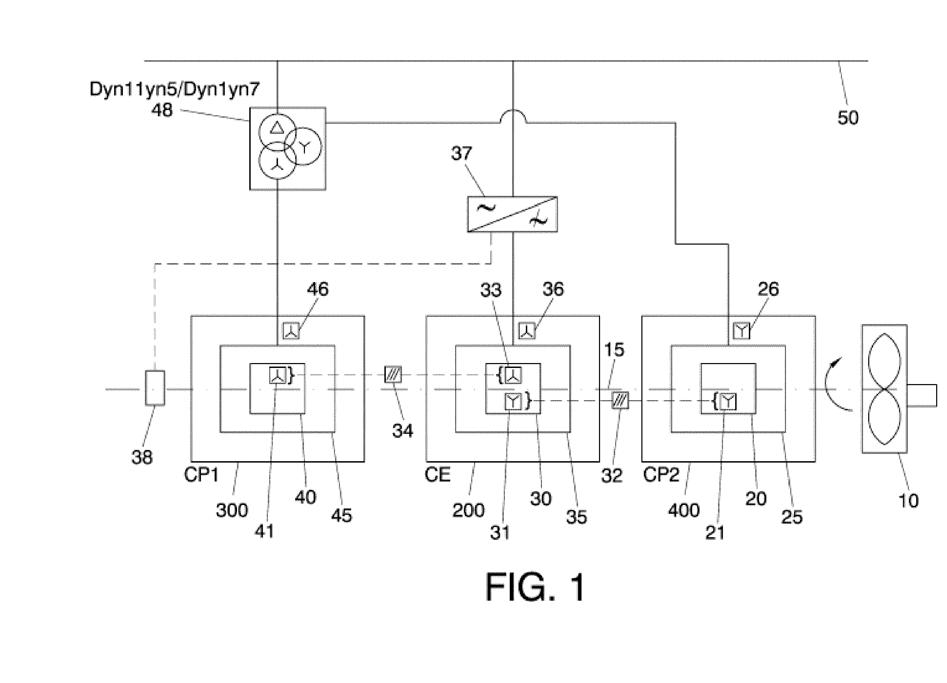

As can be observed in figure 1, the present invention consists of an alternating-current (AC) three-phase electrical generator which comprises three independent magnetic circuits: an exciter set CE (200), a first power set CP1 (300), a second power set CP2 (400) with its parts incorporated in a common frame (not indicated in the figures) with a common shaft (15), and means for transmitting the electric power generated to the Power Grid (50), in this example, the transformer (48). This alternating-current three-phase electrical machine is commonly referred to as a generator.

The exciter set CE (200) is composed by a CE rotor (30) coupled to or mounted onto the shaft (15) and has a first three-phase winding (31) and a second winding (33), wye-connected (Y) and 180° electrically out-of-phase with each other, and a CE stator (35) having a third three-phase winding (36) and fed by a frequency converter (37) or static frequency converter. In this way, the armature reaction of the first winding (31) is eliminated by the armature reaction of the second winding (33), hence the net magnetic field produced by the third winding (36) in the CE stator (35) remains unaltered by any state of electrical charge produced in the three-phase alternator itself.

First power set CP1 (300) is composed by a CP1 rotor (40) coupled to or mounted onto this shaft (15) with a fourth wye-connected three-phase winding (41) and connected by means of a solidary connection (34) to the second winding (33) of the CE rotor (30) of the exciter set CE (200), and the CP1 stator (45) with a fifth three-phase winding (46) wye-connected to a three-winding (48) three-phase transformer having two three-phase wye-connected windings and a third three-phase delta-connected (Δ) winding.

Second power set CP2 (400) is composed of a CP2 rotor (20) coupled to or mounted onto this shaft (15) with a sixth wye-connected (Y) three-phase winding (21) connected by means of a solidary connection (32) to the first winding (31) or the CE rotor (30) of the exciter set CE (200) and a CP2 stator (25) with a seventh three-phase winding (26) wye-connected to the other wye-connected three-phase winding of the aforementioned three-winding three-phase transformer.

Aforement two magnetic circuits referred to as circuits or power sets CP1, CP2 (300, 400) must be identical in construction, i.e. their rotors (20, 40), windings (21, 26, 41, 46) and stators (25, 45) have identical electromagnetic properties respectively and their function is to convert the rotating mechanical energy of the common shaft (15) into electrical energy which is injected into the Power Grid (50).

Magnetic circuit referred to as exciter set or circuit CE (200) has the function of regulating the frequency of the electric current intensities that are "injected" into the rotors (20, 40) of the other two power sets CP1, CP2 (300, 400).

Drive end of the common shaft (15), whereonto the three rotors (20, 30, 40) of the magnetic sets CE, CP1, CP2 (200, 300, 400) are mounted or coupled, is suitable for mounting or coupling a prime mover (10) such as, for example, the blades of a windmill at a wind or of a hydraulic turbine.

Electric current injection to the windings of the CE rotor (30) of the exciter set CE (200) into the windings (21, 41) of the rotors (20, 40) of power sets CP1, CP2 (300, 400) is carried out without need of slip rings by means of solidary connections (32, 34).

As the two power sets CP1, CP2 (300, 400) have identical rotation sense and the windings (41, 21) of the rotor (40, 20) are connected to 180° out-of-phase windings of the exciter set CE (200), the voltage induced in the stators (45, 25) of both sets (300, 400) is 180° out-of-phase, and therefore is necessary to install at the outgoing of both stators CP1 (45) and CP" (25) a three-phase 3-winding transformer with the following connection group Dyn11yn5 or Dyn1yn7.

Rated voltages of the two main windings of the three-phase transformer (48), both wye-connected (Y), are identical. The third winding of this three-phase transformer is delta-connected (Δ) to the Power Grid (50), which supplies the reactive power (kVAR) and receives the active power produced by this induction (asynchronous) three-phase generator.

Third winding of the three-phase transformer (48), is connected at delta (Δ) and through it circulates the third-harmonic magnetizing current which is necessary in order to transformer magnetic flux should be sinusoidal.

Three-phase winding (36) of the CE stator (35) of the exciter set CE (200) is fed by the frequency converter (37), the frequency of which must be automatically regulated in the frequency converter itself (37) to a value such that the rotating magnetic field of this exciter set CE (200) subtracted from the physical rotation speed of the common shaft (15) causes the electric currents induced in the windings (31, 33) installed in the CE rotor (30) to have a frequency $f_i$-injected frequency value given by the formula:

$$f_i = f_{exc} - P_e \cdot rps_{shaft} \qquad [\text{I}]$$

where:

$f_i$ = frequency (Hz) of the electric currents induced in the two windings (31 and (33) installed in the CE rotor (30).
$f_{exc}$ = frequency (Hz) of the electric currents applied to the third winding (36) installed in the CE stator (35).
$P_e$ = number of pairs of poles in the exciter set CE (200).
$rps_{shafi}$ = physical rotation speed (rps) at common shaft (15).

These electric currents induced in the two CE windings (31, 33) are electrically connected to the rotor windings (21, 41) of power sets CP1, CP2 (300, 400), respectively; naturally, the frequency thereof is $f_i$.

The rotating magnetic field in the fifth winding (46) installed in the CP1 stator (45) of the first power set CP1 (300) rotates at a speed, according to the formula:

$$N1 = \frac{fsist}{Pp} \qquad [\text{II}]$$

where:

$N_1$ = rotation speed of the magnetic field produced by the fifth winding (46) in the CP1 stator (45) in rps.
$f_{sist}$ = frequency of the electrical system that supplies the reactive power (kVAR) in the fifth winding (46) in the CP1 stator (45) in Hz.
$Pp$ = number of pairs of poles in CP1 and CP2.

However, this rotating magnetic field in the CP1 stator (45) of the first power set CP1 (300) is sensitive to the magnetic field produced by the electric currents circulating in the fourth winding (41) of the CP1 rotor (40) at a rotation speed, according to the formula:

$$N2 = rps_{eje} + \frac{f_i}{P_p} \qquad [\text{III}]$$

where:

N2 = rotation speed of the magnetic field produced in the fourth winding (41) of the CP1 rotor (40) respect to the fifth winding (46) of the CP1 stator (45).

In order to the mechanical energy of the common shaft (15) to be transferred into electrical energy in the fifth winding (46) of the CP1 stator (45) through the corresponding coupling magnetic field to the first power set CP1 (300), the rotation speed described in formula [III] should be greater than $N_1$. This requires the introduction of slip conception utilized at Electrical Machinery textbooks.

At three-phase induction electrical machine, the rotating magnetic field produced by the electric currents in the stator rotates at a speed $N_1$ in rps or rpm and the rotating magnetic field produced by the electric currents circulating in the fourth winding (41) of the CP1 rotor (40) rotates at a speed of $N_2$ in rps or rpm. The value given by the following formula is referred to as slip "S"

$$S = \frac{N_1 - N_2}{N_1} \qquad\qquad [IV]$$

If N1 > N2, S is positive and the induction electrical machine develops a mechanical torque in the rotor shaft (electric motor).

If N1 < N2, S is negative and the induction electrical machine develops electrical energy in the stator (asynchronous or induction generator).

In the case at hand, N1 is given by the formula [II] but the magnetic field of the electric currents in the CP1 rotor (40) is rotating according to formula [III] and, therefore, in order for the first power set CP1 (300) to operate as an induction generator, it is required that:

$N_1 < N_2$, i.e.

$$\frac{f_{sist}}{P_p} < rps_{eje} + \frac{f_i}{P_p} \qquad ,$$

and that slip S is negative.

In practice, the value of $N_2$ must be slightly greater than the value of $N_1$ in order for power sets CP1, CP2 (300, 400) to operate in the stable part of the Mechanical torque developed vs. Speed (rps) curve of both power sets CP1, CP2 (300, 400).

The whole foregoing described in the case of the second winding (33) in the exciter set CE (200) electrically connected to the fourth winding (41) of the first power set CP1 (300) is also applied to the first winding (31) in the exciter set CE (200) electrically connected to the sixth winding (21) of the first power set CP1 (400).

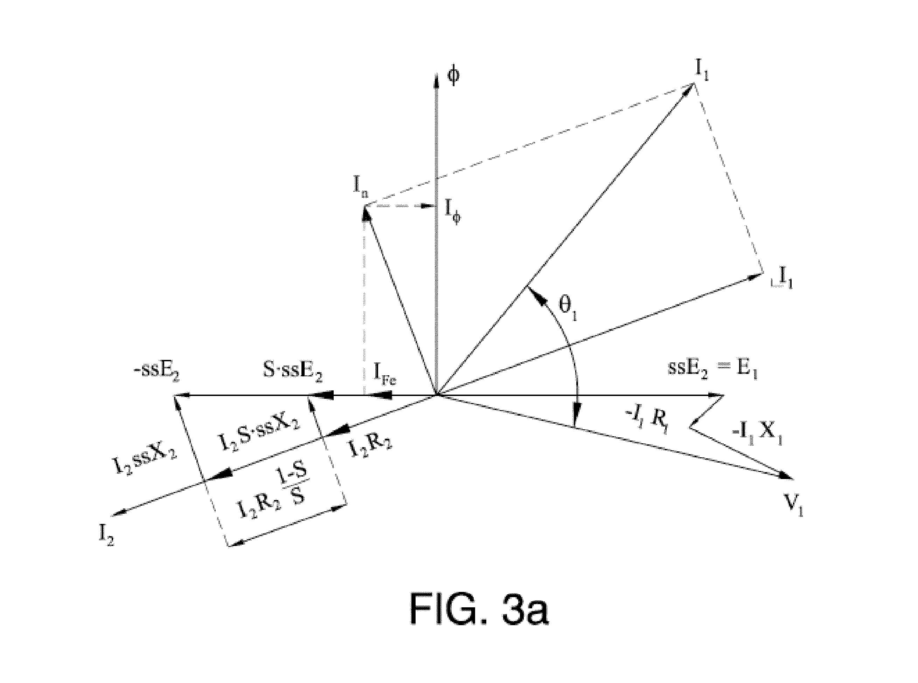

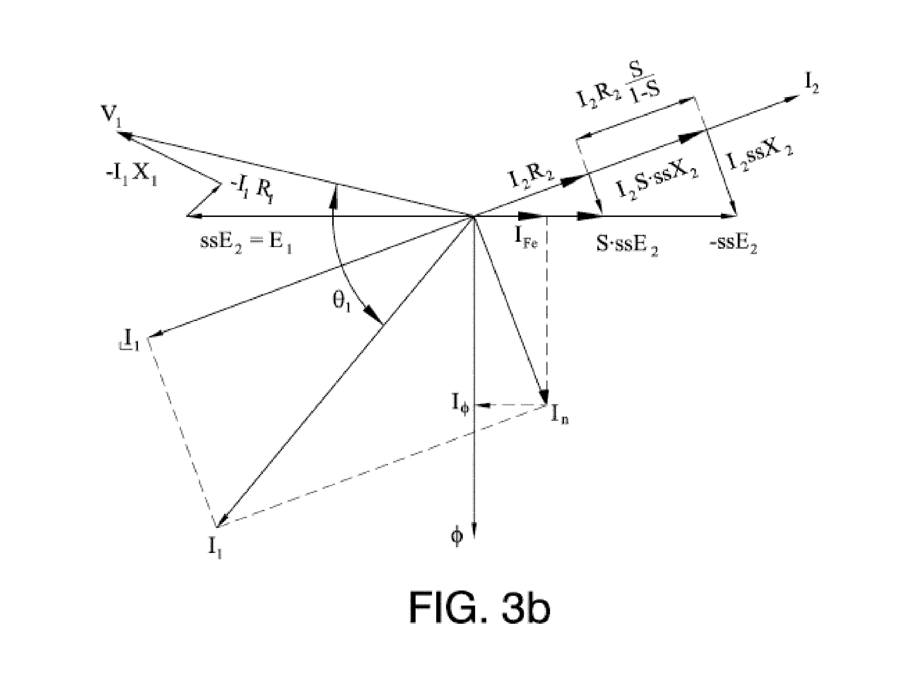

Figures 3a and 3b represent the phasorial diagrams in power sets CP1, CP2 (300, 400).

If the power sets CP1, CP2 (300, 400) are of identical construction, their rotors (20, 40) rotate at the same speed and in the same direction and, additionally, each winding (41, 21) is respectively electrically connected to one of the rotor windings (33, 31) of the exciter set CE (200), which are 180° out-of-phase, then the values of the electric current circulating in the windings (41, 21) $I_2$ will be 180° out-of-phase and the armature reaction of one is compensated by that of the other; therefore, there will be no variation in the voltage or electric current value for any state of electrical charge of the generator.

At the non-drive end of said shaft (15), an impulse generator (38) or tacho generator is installed, which measures the rotation speed of the common shaft (15) and sends a signal in order to regulate the frequency "injected" by the frequency converter (37) into the third three-phase winding (36) of the CE stator (35) of the exciter set CE (200).

This constitutes a "closed loop" automatic control circuit, in such way that the frequency of the electric currents in both three-phase windings (31, 33) in the rotor (30) of the exciter set CE (200), added to the rotation speed of the common shaft (15), causes the three-phase windings (26, 46) of the stators (25, 45) of each power set CP1, CP2 (300, 400) to be sensitive to the magnetic field produced by the electric current in the windings (21, 41) of the rotors (20, 40), which rotate at a speed slightly higher than the rotation speed of the magnetic field in the windings (26, 46) of the power sets (CP1, CP2), which depend on Power Grid (50) frequency.

Of course, the windings (26, 46) of the three-phase stators (25, 45) of the power sets CP1, CP2 (300, 400) are connected to the Power Grid (50), wherefrom they receive the reactive power (kVAR), which produces the aforementioned rotating magnetic field at the air gap of these two power sets CP1, CP2 (300, 400).

Number of poles of power sets CP1, CP2 (300, 400) must be greater than the number of poles of the exciter set CE (200) in order to the frequency of the electric currents circulating in the windings (21, 41) of the rotors (20, 40) of power sets CP1, CP2 (300, 400) to multiply its effect with respect to the frequency imposed by the Power Grid (50).

With this machine it is possible to convert the rotating mechanical energy in the turbine (wind or hydraulic) into electrical energy furnished to the Power Grid (50) without need for installing a mechanism for multiplying this mechanical rotation speed.

Additionally, the conversion of mechanical energy into electrical energy occurs at subsynchronous rotation speeds.

Frequency to be "injected" into the exciter set CE (200) is carried out in the CE stator (35) and the windings (31, 33, 41, 21) of the rotors (20, 30, 40) of the three magnetic circuits or sets (CE, CP1, CP2) are coaxial with said shaft (15), the three rotors (20, 30, 40) operating at a common and identical rotation speed. The electrical connections between the windings (41, 33, 31, 21) of the rotors (40, 30, 20) are established in a direct or solidary way, due to which the use of slip rings are not required.

As this machine can be installed at the top of a wind tower, inside of a "gondola", the frame of the three-phase generator doesn't require, environmental protection, thereby substantially reducing the weight of the gondola and the structural stress of the wind tower.

"Phase-inverting" three-phase transformer (48) can be installed at ground level and, therefore, does not add structural stress to the assembly.

Electric machine of the present invention can be used as an "island", i.e. not connected to the Power Grid (50), but, then it requires the installation of a synchronous machine (overexcited electrical generator or motor) or a previously charged static condenser, (capacitor) supplying a reactive power (kVAR) source in parallel.

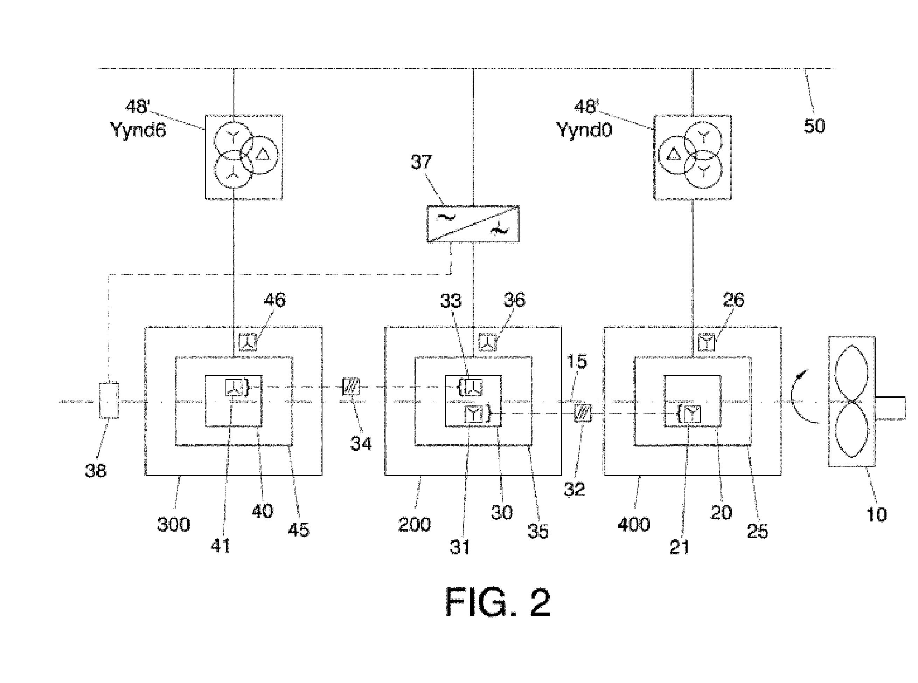

Finally, figure 2 shows an example of a generator where the transformer (48) is substituted for two three-phase transformers (48') having two windings each and connection groups Yyn0 and Yyn6, both having identical electromagnetic characteristics, respectively connected between the stators (45, 25) of power sets CP1 (300) and CP2 (400) and the Power Grid (50).

**Claims**

1. A three-phase electrical generator for a wind or hydraulic turbine, **characterised in that** it comprises:

   a) an exciter set CE (200) which comprises:

   - a rotor (30) coupled to the turbine axle (15) having a first three-phase winding (33) and a second three-phase winding (31), star-connected and 180° electrically out-of-phase with each other, and
   - a stator (35) having a third star-connected three-phase winding (36), the exciter set CE (200) being fed by means of a frequency converter (37) connected to the power grid (50) which is adapted to regulate the supply frequency of the third winding (36) in accordance with the rotation speed of the axle (15);

   b) a first power set CP1 (300) which comprises:

   - a rotor (40) coupled to said axle (15) and having a fourth star-connected three-phase winding (41) in contact, by means of a solidary connection, with the second (33) winding of the rotor (30) of the exciter set CE (200), and
   - a stator (45) having a fifth star-connected three-phase winding (46);

   c) a second power set CP2 which comprises:

   - a rotor (20) coupled to the axle (15) and having a sixth star-connected three-phase winding (21) in contact, by means of a solidary connection, with the first winding (31) of the rotor (30) of the exciter set CE (200), and
   - a stator (25) having a seventh star-connected three-phase winding (26);

   d) power transmission means (48, 48') connected to the stators (45, 25) to transmit the power generated by power sets CP1 (300) and CP2 (400) to the power grid (50).

2. A generator, according to claim 1, wherein the power transmission means comprise a three-phase transformer (48) having at least three windings respectively connected to the stator (45) of power set CP1 (300), to the stator (26) of power set CP2 and to the power grid (50).

3. A generator, according to claim 2, wherein the transformer (48) has three windings with a connection group Dyn11yn5 or Dyn1yn7, the mutual inductances between the triangle-connected winding and the two star-connected windings being identical, and wherein a star winding is connected to the stator (45) of power set CP1 (300), the other star winding is connected to the stator (25) of power set CP2 (400) and the triangle winding is connected to the power grid (50).

4. A generator, according to claim 1, wherein the power transmission means comprise two three-phase transformers (48') having two windings each and connection groups Yyn0 and Yyn6, both having identical electromagnetic characteristics, respectively connected between the stators (45, 25) of power sets CP1 (300) and CP2 (400) and the power grid (50).

5. A generator, according to any of the preceding claims, wherein power sets CP1 (300) and CP2 (400) are identical.

6. A generator, according to any of the preceding claims, wherein both the number of poles of the first power set CP1 (300) and the number of poles of the second power set CP2 (400) is greater than the number of poles of the exciter set CE (200).

7. A generator, according to any of the preceding claims, wherein the exciter set CE (200) and power sets CP1 (300) and CP2 (400) are disposed in such a manner that they are independent from each other.

8. A generator, according to any of the preceding claims, which additionally comprises an impulse generator (38) adapted to detect axle (15) rotation speed and convert it into a proportional-integral electrical signal that controls the frequency converter (37) output frequency applied to the third three-phase winding (36), in such a manner that if the axle (15) varies its rotation speed the frequency converter (37) output frequency proportionally varies its value so that a slip S in power sets CP1 (300) and CP2 (400) remains within a stable area of the characteristic Mechanical torque developed vs. Rotation speed curve.

FIG. 1

FIG. 2

FIG. 3a

FIG. 3b

## INTERNATIONAL SEARCH REPORT

| | International application No |
|---|---|
| | PCT/ES2010/070540 |

**A. CLASSIFICATION OF SUBJECT MATTER**
INV.   F03D9/00        H02K17/44       H02P9/30
ADD.

According to International Patent Classification (IPC) or to both national classification and IPC

**B. FIELDS SEARCHED**

Minimum documentation searched (classification system followed by classification symbols)

F03D   H02K   H02P

Documentation searched other than minimum documentation to the extent that such documents are included in the fields searched

Electronic data base consulted during the international search (name of data base and, where practical, search terms used)

EPO-Internal

**C. DOCUMENTS CONSIDERED TO BE RELEVANT**

| Category* | Citation of document, with indication, where appropriate, of the relevant passages | Relevant to claim No. |
|---|---|---|
| Y | DE 762 696 C (BROWN) 1 June 1953 (1953-06-01) page 1, lines 9-15; figures 1-4 page 2, lines 29-34,49-59 page 3, lines 53-76 ----- | 1,2,4-8 |
| Y | GB 1 264 501 A (WESTINGHOUSE ELECTRIC CORP.) 23 February 1972 (1972-02-23) page 1, lines 13-17,27-32,45-49,67-70; figures 1-3 page 2, lines 13-17,20-26,37-50 ----- | 1,2,4-8 |
| Y | DE 16 13 573 A1 (BBC BROWN BOVERI & CIE) 28 October 1971 (1971-10-28) | 2 |
| A | figure 1 ----- | 3,4 |
| | -/-- | |

| X | Further documents are listed in the continuation of Box C. | | X | See patent family annex. |

\* Special categories of cited documents :

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art.

"&" document member of the same patent family

| Date of the actual completion of the international search | Date of mailing of the international search report |
|---|---|
| 8 April 2011 | 20/04/2011 |

| Name and mailing address of the ISA/ | Authorized officer |
|---|---|
| European Patent Office, P.B. 5818 Patentlaan 2 NL - 2280 HV Rijswijk Tel. (+31-70) 340-2040, Fax: (+31-70) 340-3016 | Kanelis, Konstantin |

Form PCT/ISA/210 (second sheet) (April 2005)

## INTERNATIONAL SEARCH REPORT

| International application No |
| --- |
| PCT/ES2010/070540 |

C(Continuation).   DOCUMENTS CONSIDERED TO BE RELEVANT

| Category* | Citation of document, with indication, where appropriate, of the relevant passages | Relevant to claim No. |
| --- | --- | --- |
| Y | EP 2 169 222 A2 (REPOWER SYSTEMS AG) 31 March 2010 (2010-03-31) | 4 |
| A | paragraphs [0032], [0033]; figure 4 ----- | 2,3 |
| Y | GB 703 263 A (VICKERS ELECTRICAL CO LTD) 3 February 1954 (1954-02-03) page 5, lines 31-35; figure 1 ----- | 1,8 |
| A | EP 1 903 212 A2 (HONEYWELL INT INC) 26 March 2008 (2008-03-26) figures 1-10 ----- | 1-8 |
| A | JP 58 009556 A (HITACHI LTD) 19 January 1983 (1983-01-19) abstract; figures 1-6 ----- | 1-8 |

Form PCT/ISA/210 (continuation of second sheet) (April 2005)

## INTERNATIONAL SEARCH REPORT
Information on patent family members

| | International application No |
|---|---|
| | PCT/ES2010/070540 |

| Patent document cited in search report | | Publication date | Patent family member(s) | | Publication date |
|---|---|---|---|---|---|
| DE 762696 | C | 01-06-1953 | NONE | | |
| GB 1264501 | A | 23-02-1972 | BE | 731305 A | 10-10-1969 |
| | | | FR | 2006088 A1 | 19-12-1969 |
| | | | SE | 352211 B | 18-12-1972 |
| | | | US | 3549919 A | 22-12-1970 |
| DE 1613573 | A1 | 28-10-1971 | SE | 356408 B | 21-05-1973 |
| EP 2169222 | A2 | 31-03-2010 | CN | 101719664 A | 02-06-2010 |
| | | | DE | 102008049630 A1 | 08-04-2010 |
| | | | US | 2010091417 A1 | 15-04-2010 |
| GB 703263 | A | 03-02-1954 | NONE | | |
| EP 1903212 | A2 | 26-03-2008 | US | 2008067984 A1 | 20-03-2008 |
| JP 58009556 | A | 19-01-1983 | NONE | | |

Form PCT/ISA/210 (patent family annex) (April 2005)